# EUROPÄISCHE PATENTANMELDUNG

(11) **EP 0 541 910 A1**
(43) Veröffentlichungstag der Anmeldung: **19.05.1993**
(21) Anmeldenummer: 92113651.1
(22) Anmeldetag: 11.08.1992
(51) Int. Cl.: F16L 5/02

(54) **Mauerdurchführung**

(30) Priorität: 15.11.1991 DE 9114239 U
(71) Anmelder: REHAU AG + Co, 95111 Rehau (DE)
(72) Erfinder: Beyer, Wolfgang, W-8505 Wendelstein (DE)

(57) **Zusammenfassung**

Die Erfindung betrifft eine Mauerdurchführung für Rohre, Kabel oder Leitungen. Sie besteht aus einem in einen Mauerdurchbruch einsetzbaren hohlen Bauteil, insbesondere einem Wellrohr. Dieses hohle Bauteil ist im Durchführungsbereich gegen das Mauerwerk abgedichtet und im Mauerdurchbruch durch wenigstens zwei abstandhaltende, aus Halbschalen bestehende Kaliber zentriert. Die Erfindung wird darin gesehen, daß die Halbschalen (11, 12) der Kaliber (1) an ihrem inneren Umfang der Teilung der Außenwellungen (21, 22) des hohlen Bauteils (2) entsprechende rippenartige Erhöhungen (121, 122) aufweisen. Diese rippenartigen Erhöhungen (121, 122) greifen nach der Montage als axiale Verschiebesicherung in die zugeordneten Wellentäler (21, 22) der Außenwellungen des hohlen Bauteils (2) ein.

## Beschreibung

Die Neuerung betrifft eine Mauerdurchführung für Rohre, Kabel oder Leitungen, bestehend aus einem in den Mauerdurchbruch einsetzbaren hohlen Bauteil, insbesondere einem Wellrohr, wobei das hohle Bauteil im Durchführungsbereich gegen das Mauerwerk abgedichtet und durch wenigstens zwei Abstand haltende, vorzugsweise aus Halbschalen bestehende Kaliber in dem Mauerdurchbruch zentriert ist.

Mauerdurchführungen sind in vielerlei Ausführungsformen bekannt. In der DE-OS 36 29 140 wird eine Mauerdurchführung beschrieben, welche aus zwei Hohlkörpern besteht, die durch eine Schraubenfeder miteinander verbunden sind. Die Schraubenfeder ist durch einen Schrumpfschlauch nach außen abgedeckt, wobei dieser Schrumpfschlauch an Wandbereichen der Hohlkörper befestigt, z,B. verklebt ist. Der Schrumpfschlauch wird danach auf die gespannte Schraubenfeder aufgeschrumpft, so daß die Schrumpfschlauchwandung in die Bereiche zwischen zwei Wendeln der Schraubenfeder eindringen kann. Auf diese Weise kann sich der Schrumpfschlauch nach Art eines Kompensators ausdehnen, sobald sich die Schraubenfeder zwischen den beiden Hohlkörpern ausdehnt.

Beide Hohlkörper besitzen bei der bekannten Ausführungsart einen den Durchmesser der Hohlkörper überragenden Kragen, mit dem sich die Mauerdurchführung im Endsitz an den zugeordneten Wandbereichen des Mauerwerks abstützt. Hierbei können zwischen dem Kragen und dem Mauerwerk Dichtungsmittel angeordnet sein, welche eine zusätzliche Abdichtung der Maueröffnung bei eingesetzter Mauerdurchführung bewirken.

Vor dem Spannen der Schraubenfeder zwischen den beiden Hohlkörpern kann in die verbleibende Maueröffnung ein Dichtungsmittel, z.B. eine dauerelastische oder dauerplastische Masse eingefüllt werden. Diese Masse befindet sich dann in dem Ringspalt zwischen dem Mauerdurchbruch, den Hohlkörpern und dem Schrumpfschlauch über der Schraubenfeder.

Wird die gespannte Schraubenfeder danach entspannt, d.h. zieht sich die Schraubenfeder zusammen und verpresst die an den Hohlkörpern befindlichen Kragen an den zugeordneten Flächen des Mauerwerks, bewirkt dieses Zusammenziehen auch ein Verpressen der dauerelastischen bzw. dauerplastischen Masse im Ringspalt zwischen dem Mauerdurchbruch und der Außenoberfläche der Mauerdurchführung. Damit wird eine elastische Abdichtung der Mauerdurchführung in der Maueröffnung erzielt.

Der Nachteil dieser bekannten Vorrichtung wird darin gesehen, daß die zum Aufbau der Mauerdurchführung verwendeten hohlen Bauteile Formteile sind, die jeweils einer bestimmten Mauerdicke entsprechen. So benötigt man für dickere Mauern andere Formteile als für dünnere Mauern und umgekehrt.

Aus dem DE-GM 89 15 213 ist eine weitere Mauerdurchführung für Rohre, Kabel oder Leitungen bekannt, bei der das hohle Bauteil ein Wellrohr ist. Die den Mauerdurchbruch bildenden Verschlußelemente sind Deckelteile, welche zum Mauerwerk hin einen Hohlraum über dem Wellrohr einschließen. Diese Deckelteile sind auf dem Wellrohr verschieblich angeordnet und stützen sich in ihrem Endsitz am Mauerwerk mit Rastfüßen in den zugeordneten Wellungen des Wellrohres ab. Die Hohlräume zwischen dem Mauerwerk und den Deckelteilen sowie zwischen dem Wellrohr und dem Mauerdurchbruch können nach der Verbringung der Deckelteile in den Endsitz mit einer dauerplastischen oder dauerelastischen Masse ausgespritzt werden, so daß eine dichte Verbindung zwischen dem Wellrohr mit den Deckelteilen und dem Mauerwerk entsteht.

Dieser bekannte Aufbau einer Mauerdurchführung ist für qualitativ hochwertige Durchführungen hervorragend brauchbar, ist jedoch für einfachere Durchführungen zu aufwendig.

Aus der DE-PS 39 40 870 ist eine Mauerdurchführung zur Einführung von Kabeln und Rohren in Gebäude bekannt, bei der das Durchführungsrohr von mindestens zwei Abstandhaltern umgeben ist. Diese Abstandhalter zentrieren das Durchführungsrohr in der Wandbohrung und distanzieren es um ein vorgegebenes Maß von der Wand des Mauerdurchbruchs. Wenigstens einer dieser Abstandshalter ist dabei auf dem äußeren Umfang des Durchführungsrohres axial verschiebbar montiert.

Die Abstandhalter selbst bestehen aus T-förmigen Halbschalen, wobei der schalenbildende Quersteg des Wanddurchführungsrohr umfaßt und der T-Steg radial vom schalenbildenden Quersteg absteht. Im Bereich der Stoßflächen der Halbschalen besitzen diese einerseits einen Steckzapfen und andererseits eine Steckbohrung, so daß jeweils zwei kreisförmige Halbschalen zu einem Kreis zusammengesteckt werden können.

Bei der Montage wird der axial auf dem Durchführungsrohr verschiebliche Abstandhalter so lange in den Mauerdurchbruch hinein verschoben, bis beide außenliegenden Abstandhalter jeweils einen Abstand von wenigstens 80 mm Tiefe zur Mauerkante aufweisen. Dieser Abstand ist erforderlich, um einen entsprechenden Raum zum Vermörteln des Durchführungsrohres in der Maueröffnung zur Verfügung zu haben. Der verbleibende Raum bis zu den Abstandhaltern wird dann mit einer Dichtungsmasse ausgespritzt und das Durchführungsrohr auf diese Weise abgedichtet in dem Mauerdurchbruch festgelegt.

Als nachteilig ist bei diesem Aufbau anzusehen, daß der axial auf dem Durchführungsrohr verschiebliche Abstandhalter durch den Einspritzdruck des Dichtmitels über das vorgegebene Tiefenmaß hinaus auf dem Umfang des Durchführungsrohres in den Mauerdurchbruch hinein verschoben werden kann. Die abstandhaltende und zentrierende Wirkung dieses Abstandhalters kann durch diese zusätzliche Verschiebemöglichkeit aufgehoben werden.

Hier setzt die Neuerung ein, die es sich zur Aufgabe gestellt hat, unter Beibehaltung aller Vorteile des Standes der Technik eine axial unverschiebliche Kalibrierung bzw. Zentrierung des Durchführungsrohres im Mauerdurchbruch zu ermöglichen. Neuerungsgemäß wird dazu vorgeschlagen, daß die Halbschalen der Kaliber an ihrem inneren Umfang der Teilung der Außenwellungen des hohlen Bauteils entsprechende rippenartige Erhöhungen aufweisen, welche bei der Montage als axiale Verschiebesicherung in die zugeordneten Wellentäler der Außenwellungen des hohlen Bauteils eingreifen.

Nach der Neuerung wird als erster Schritt zur Herstellung einer dichten Durchführung der aus zwei Halbschalen bestehende erste Abstandhalter über den angeformten Steckzapfen und die eingeformte Bohrung auf dem Wellrohr festgelegt. Dabei greifen die rippenartigen Erhöhungen am inneren Umfang der Halbschalen in die zugeordneten Wellentäler der Außenwellungen des Wellrohres ein und legen diesen ersten Abstandhalter verschiebegesichert am äußeren Umfang des Wellrohres fest. Der Begriff "Festlegen" ist hier so zu verstehen, daß dieser erste Abstandhalter zwar axial verschiebegesichert ist, jedoch radial drehbar auf dem Wellrohr verbleibt. Nachdem es sich bei den hier eingesetzten Wellrohren im allgemeinen um ringgewellte Rohre handelt, kann diese Drehbewegungsmöglichkeit auch nicht dazu führen, daß der Abstandhalter beispielsweise auf einem spiralgewellten Rohr im Sinne einer Schraubbewegung axial nach vorwärts oder rückwärts zu drehen ist. Die stationäre, radiale Drehbewegungsmöglichkeit des Abstandhalters hat keinerlei schädliche Auswirkungen auf seinen Einsatz als Abstütz- und Zentrierelement eines Durchführungsrohres in einem Mauerdurchbruch.

Entsprechend der Dicke der durchbrochenen Wand wird nunmehr der zweite Abstandhalter in gleicher Weise wie der erste auf dem äußeren Umfang des Wellrohres derart festgelegt, daß beide Abstandhalter zu ihrer jeweiligen Mauerkante in einem Mindestabstand von 80 mm zur Herstellung des umlaufenden Verfüllspaltes für das danach einzubringende Dichtungsmaterial stehen.

Diese Methode hat den Vorteil, daß mit der neuerungsgemäßen Mauerdurchführung mit einem Wellrohr und zwei Abstandhaltern beliebig dicke Mauern durchsetzt werden können, da über den zweiten Abstandhalter der Verfüllspalt im Außenbereich des Mauerwerks beliebig eingestellt werden kann. Darüber hinaus ist von besonderem Vorteil, daß dieser eingestellte Abstand nachträglich nicht mehr verändert werden kann. Auch der Einspritzdruck des Dichtmittels hat keine Möglichkeit mehr, den auf die Wellungen des Wellrohres aufgerasteten Abstandhalter zu verschieben, da diesem Einspritzdruck die in die Wellentäler der Außenwellungen des Wellrohres eingreifenden rippenartigen Erhöhungen des Abstandhalters entgegenwirken.

Bei diesen rippenartigen Erhöhungen kann es sich um radial umlaufende Rippen handeln, wobei zwei halbkreisartige Teilrippen zweier Halbschalen sich nach der Verrasterung zu einem Vollkreis ergänzen. Die rippenartigen Erhöhungen können aber auch über den inneren Umfang des Abstandhalters verteilte Ausformungen sein, die als Haltekrallen in die Wellentäler der Außenwellungen des Wellrohres eingreifen.

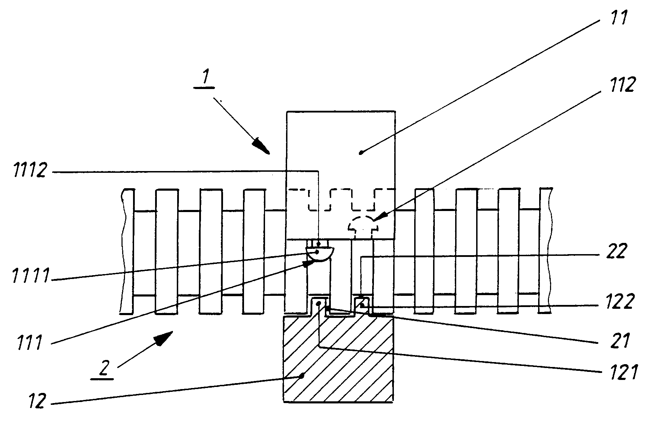

In der Zeichnung ist ein Teilschnitt eines Abstandhalters 1 mit der oberen Halbschale 11 und der teilgeschnittenen unteren Halbschale 12 gezeigt. Der Abstandhalter 1 ist in seiner Montagestellung auf dem ringgewellten Wellrohr 2 dargestellt. Aufgrund der teilgeschnittenen Ansicht ist der Steckzapfen 111 der oberen Halbschale 11 positiv gezeichnet. Der Steckzapfen 111 besteht aus einem pilzkopfartigen Oberteil 1111 und einem mit der Halbschale 11 einstückig verbundenen Schaft 1112.

In der oberen Halbschale 11 ist im Abstand vom Steckzapfen 111 die entsprechende Ausnehmung 112 strichliert dargestellt. In diese Ausnehmung 112 greift im Verrasterungszustand der in der Zeichnung nicht dargestellte Steckzapfen der unteren Halbschale 12 ein.

In der unteren Halbschale 12 sind die rippenartigen Erhöhungen 121, 122 zu sehen, wie sie in die zugeordneten Wellentäler 21, 22 eingreifen. Durch die Darstellung wird deutlich, daß die Konturen der rippenartigen Erhöhungen 121, 122 den Konturen der Wellentäler 21, 22 entsprechen. Auf diese Weise wird eine egen axiales Verschieben gesicherte Festlegung des Abstandhalters 1 auf dem Wellrohr 2 erreicht.

## Patentansprüche

1. Mauerdurchführung für Rohre, Kabel oder Leitungen, bestehend aus einem in den Mauerdurchbruch einsetzbaren hohlen Bauteil, insbesondere einem Wellrohr, wobei das hohle Bauteil im Durchführungsbereich gegen das Mauerwerk abgedichtet und durch wenigstens zwei Abstand haltende, aus Halbschalen bestehende Kaliber in dem Mauerdurchbruch zentriert ist, dadurch gekennzeichnet, daß die Halbschalen (11, 12) der Kaliber (1) an ihrem inneren Umfang der Teilung der Außenwellungen (21, 22) des hohlen Bauteils (2) entsprechende rippenartige Erhöhungen (121, 122) aufweisen, welche nach der Montage als axiale Verschiebesicherung in die zugeordneten Wellentäler (21, 22) der Außenwellungen des hohlen Bauteils (2) eingreifen.
